# EUROPÄISCHE PATENTANMELDUNG

(11) **EP 0 582 022 A1**
(43) Veröffentlichungstag der Anmeldung: **09.02.1994**
(21) Anmeldenummer: 92810591.5
(22) Anmeldetag: 03.08.1992
(51) Int. Cl.: C01C 1/08, C01C 1/04, B01D 53/34

(54) **Verfahren zum Herstellen von gasförmigem Ammoniak aus Harnstoff**

(71) Anmelder: PAUL SCHERRER INSTITUT, CH-5232 Villigen PSI (CH); ABB Management AG, CH-5401 Baden (CH)
(72) Erfinder: Koebel, Manfred, dr., CH-5234 Villigen (CH)
(74) Vertreter: Hammer, Bruno, Dr.

(57) **Zusammenfassung**

Bei dem Verfahren werden Harnstoff (2) und Wasser (3) in einer mindestens einen katalytisch wirksamen Stoff enthaltenden Wirbelschicht (12) bei einer Temperatur zwischen 200 und 450°C zur chemischen Reaktion gebracht. Das bei dieser Reaktion gebildete gasförmige Ammoniak wird mittels des die Wirbelschicht durchströmenden gasförmigen Trägermediums abgezogen und einer Rauchgasentstickungsanlage zugeführt.

## Beschreibung

Ein wichtiges Anwendungsgebiet von Ammoniak (NH₃) ist das Reinigen von Rauchgas, das aus Verbrennungsprozessen stammt, in denen fossile Brennstoffe verbrannt werden. Bei der bisherigen Rauchgasreinigung dieser Art wurde gasförmiges oder flüssiges Ammoniak verwendet, das bezüglich der Reinigung zwar gut ist, jedoch den Nachteil hat, dass es zur Giftklasse 2 gehört und dass bei seiner Lagerung eine behördliche Bewilligung notwendig ist. Bei anderen Rauchgasreinigungsverfahren ist schon Harnstoff verwendet worden, der hinsichtlich Giftklassenzugehörigkeit und Lagerung problemlos ist. Die Verwendung des Harnstoffs in der Rauchgasreinigung durch Eindüsen in das zu reinigende Gas, und zwar entweder in trockener Form oder als wässerige Lösung, hat den Nachteil, dass in verstärktem Masse Nebenprodukte entstehen, was aus Umweltschutzgründen unerwünscht ist. So entstehen im Falle der selektiven nichtkatalytischen Reduktion (SNCR) im Vergleich zum Reduktionsmittel Ammoniak erhöhte Mengen an Lachgas (N₂O) und Kohlenmonoxid (CO); unter ungünstigen Umständen kann das Abgas neben Ammoniak gar Isocyansäure (HNCO) enthalten.

Der Erfindung liegt die Aufgabe zugrunde, ein Verfahren zum Herstellen von gasförmigem Ammoniak zu schaffen, bei dem die obengenannten Nachteile vermieden sind.

Diese Aufgabe wird erfindungsgemäss dadurch gelöst, dass Harnstoff und Wasser in einer mindestens einen katalytisch wirksamen Stoff enthaltenden Wirbelschicht bei einer Temperatur zwischen 200 und 450°C zur chemischen Reaktion gebracht werden und das bei dieser Reaktion gebildete gasförmige Ammoniak mittels des die Wirbelschicht durchströmenden gasförmigen Mediums abgezogen wird.

Dieser Lösung liegt also die Idee zugrunde, Harnstoff als Ammoniakspeicher in der Nähe des späteren Verwendungszwecks des gasförmigen Ammoniaks zu lagern und das gasförmige Ammoniak erst zu erzeugen, wenn es für den beabsichtigten Verwendungszweck benötigt wird. Die Lagerung des Harnstoffs ist also im Vergleich zur bisherigen Lagerung von gasförmigem oder flüssigem Ammoniak wesentlich einfacher und billiger, weil wegen seiner Zugehörigkeit zur Giftklasse 4 keine behördliche Bewilligung nötig ist. Dadurch dass die Ammoniakerzeugung beim erfindungsgemässen Verfahren in der katalytischen Wirbelschicht stattfindet, ist ein Entstehen von Lachgas und Isocyansäure in einem anschliessenden Rauchgasentstickungsprozess vermieden.

Ausführungsbeispiele der Erfindung sind in der folgenden Beschreibung anhand der Zeichnung näher erläutert. Es zeigen:
- Fig.1: schematisch vereinfacht eine Vorrichtung zum Durchführen des erfindungsgemässen Verfahrens und
- Fig.2: ein Schaltschema einer stationären Dieselmotorenanlage mit Anwendung des erfindungsgemässen Verfahrens.

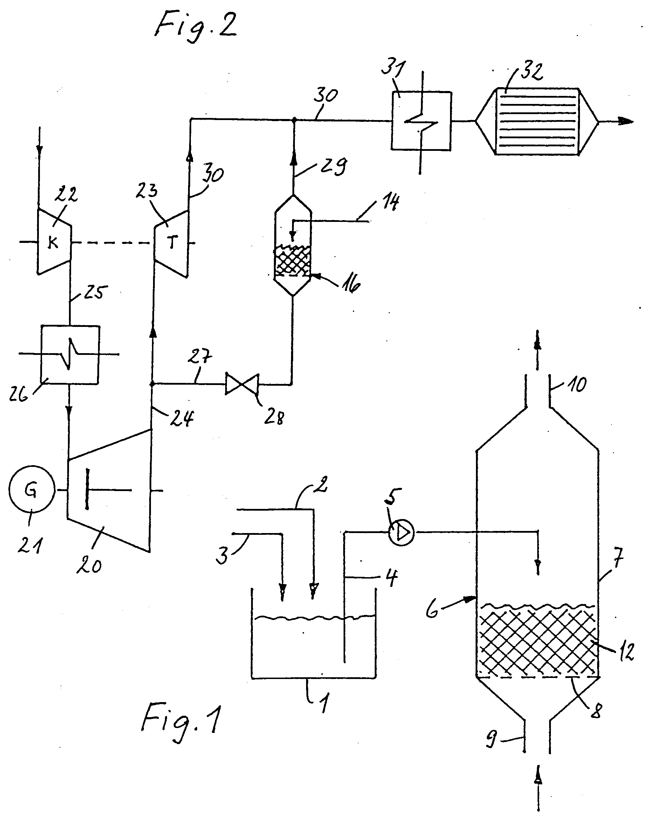

In Fig.1 ist mit 1 ein Behälter bezeichnet, in den zwei Leitungen 2 und 3 münden und aus dem eine Leitung 4 herausführt. Ueber die Leitung 2 wird dem Behälter 1 trockener Harnstoff in körniger Form zugeführt, während über die Leitung 3 Wasser zufliesst. Aus Harnstoff und Wasser, die in ungefähr gleich grossen Mengen zugeführt werden, wird im Behälter 1 eine Lösung hergestellt, die mittels einer Dosierpumpe 5 in der Leitung 4 einem Wirbelschichtreaktor 6 zugeführt wird.

Der Wirbelschichtreaktor 6 weist einen Behälter 7 auf, der nahe seinem unteren Ende mit einem Lochboden 8 versehen ist. Auf dem Lochboden 8 befindet sich eine Schüttung 12 aus Wirbelschichtmaterial, das die für die Hydropyrolyse erforderlichen katalytischen Eigenschaften besitzt. Versuche haben gezeigt, dass sich hierfür die Oxide und Oxidhydrate von Metallen wie z.B. Aluminium, Silizium, Titan, Zirkon, Chrom, Vanadium, Molybdän, Wolfram oder Mischungen davon eignen; auch Zeolithe sind einsetzbar. Bevorzugte Materialien sind Aluminiumoxid oder Aluminiumoxidhydrat. Unterhalb des Lochbodens 8 befindet sich am Behälter 7 ein Zuführstutzen 9 für ein gasförmiges Medium, z.B. Luft. Am oberen Ende des Behälters 7 ist ein Abführstutzen 10 vorgesehen. Die Leitung 4 mündet im Reaktor 6 oberhalb der Wirbelschichtschüttung 12 etwa auf der vertikalen Längsachse des Behälters 7. Sie kann auch von unten oder von der Seite ins Bett einmünden.

Die über die Leitung 4 dem Reaktor 6 zugeführte Lösung aus Harnstoff und Wasser tritt tropfenweise oder auch als dünner Strahl oberhalb der Schüttung 12 aus und wird in der Wirbelschicht verteilt. Die über den Zuführstutzen 9 in den Reaktor eintretende Luft durchdringt die Schüttung 12 und hält deren körniges Material im Schwebezustand. Die eintretende Luft weist eine Temperatur von ungefähr 500 - 600°C und einen Druck von 1 bar und mehr auf. Das Verhältnis von Luft zu Harnstofflösung wird so eingestellt, dass sich eine Temperatur von mindestens 200°C ergibt. In dieser katalytischen Wirbelschichtatmosphäre spielt sich die chemische Reaktion zwischen dem Harnstoff und dem Wasser ab, bei der gasförmiges Ammoniak und Kohlendioxyd gemäss folgender Formel entstehen:

CO(NH₂)₂ + H₂O → 2NH₃ + CO₂.

Durch die katalytisch wirksamen Stoffe wird die üblicherweise bei der Pyrolyse von Harnstofflösungen beobachtete Bildung cvon Isocyansäure weitgehend unterdrückt und daher praktisch nur Ammoniak als Zersetzungsprodukt erhalten. Tabelle 1 zeigt die Ergebnisse eines typischen Versuchs, der in einem Wirbelschichtreaktor von 80 mm Durchmesser durchgeführt wurde. Als Katalysator wurden 250 ml eines Aluminiumoxidhydrats mit einer Korngrösse von ca 1 mm eingesetzt, die zugeführte Luftmenge betrug 6,8 Normalkubikmeter/Stunde. Die Harnstofflösung hatte eine Konzentration von 50 Gew.-% und ihre Dosierrate betrug 1110 g/h.

**Tabelle 1**

| Versuchsergebnisse | | | |
|---|---|---|---|
| Lufteintrittstemp. °C | Wirbelschichttemp. °C | Anteil HNCO im Pyrolysegas Vol.-% | NH3 Vol.-% |
| 600 | 336 | 0,25 | Rest |
| 550 | 283 | 1,2 | Rest |
| 500 | 236 | 1,8 | Rest |

Das den Reaktor 6 über den Austrittsstutzen 10 verlassende Gasgemisch wird dann einem Rauchgasentstickungsprozess zugeführt.

Ein Anwendungsbeispiel dafür zeigt Fig.2, gemäss der eine Dieselmotorenanlage 20 einen elektrischen Generator 21 antreibt. Die Dieselmotorenanlage 20 weist eine übliche Aufladegruppe auf, die aus einem Kompressor 22 und einer Gasturbine 23 besteht. Die Gasturbine 23 verarbeitet Abgas aus der Dieselmotorenanlage 20, das über eine Leitung 24 zugeführt wird. Die in der Gasturbine 23 aus dem Abgas gewonnene Energie dient zum Antreiben des Kompressors 22, der Luft ansaugt, verdichtet und dann über eine Leitung 25 der Dieselmotorenanlage als Verbrennungsluft zuführt. In der Leitung 25 ist ein Ladeluftkühler 26 angeordnet. Erfindungsgemäss zweigt von der Abgasleitung 24 eine Leitung 27 ab, die über ein Regelventil 28 zum Zuführstutzen eines Wirbelschichtreaktors 16 führt, der in Aufbau und Funktion dem Wirbelschichtreaktor 6 in Fig.1 entspricht. Am Austrittsstutzen des Wirbelschichtreaktors 16 ist eine Leitung 29 angeschlossen, die in eine am Austritt der Gasturbine 23 angeschlossenen Abgasleitung 30 mündet. Die Leitung 30 führt nach der Einmündung der Leitung 29 über einen allfällig erforderlichen Kühler 31 in einen Katalysator 32. Der Austritt des Katalysators 32 mündet über einen nicht dargestellten Kamin in die Atmosphäre.

Im Betrieb der Dieselmotorenanlage 20 tritt das Abgas mit einer Temperatur von ungefähr 500°C aus dem Motor aus und strömt zum grössten Teil zur Gasturbine 23. Einige Prozente der aus der Anlage 20 austretenden Gasmenge strömt bei geöffnetem Regelventil 28 über die Leitung 27 in den Wirbelschichtreaktor 16 und übernimmt dort die Funktion als Trägermedium für das Wirbelschichtmaterial sowie die Funktion der Wärmezufuhr für die chemische Reaktion von Harnstoff und Wasser, welche Stoffe als Lösung über eine Leitung 14 in den Wirbelschichtreaktor 16 gelangen. Das dabei entstehende gasförmige Ammoniak wird dem in der Leitung 30 strömenden Abgas zugemischt. Mit Hilfe des gasförmigen Ammoniaks wird dann das von der Gasturbine 23 kommende, Stickoxyde (NOₓ)enthaltende Abgas im Katalysator 32 gereinigt, d.h. durch das Ammoniak werden die Stickoxyde in Stickstoff N₂ und Wasserdampf zerlegt.Im Katalysator 32, der nach dem SCR-Verfahren arbeitet, herrscht eine Temperatur zwischen 300 und 450°C, die gegebenenfalls mit Hilfe des Kühlers 31 eingestellt werden kann.

Wesentlich für die Erfindung ist die Temperatur, bei der sich die chemische Reaktion in der Wirbelschicht abspielt. In den Beispielen gemäss Fig.1 und 2 wird die Wärme mit dem der Wirbelschicht zuströmenden gasförmigen Medium eingebracht. Abweichend davon besteht auch die Möglichkeit, wenn die Temperatur des zuströmenden gasförmigen Mediums zu niedrig ist, die Wärme von aussen dem gasförmigen Medium und/oder dem Wirbelbett zuzuführen, z.B. durch elektrische Heizung oder durch ein Wärmerohr (heat pipe), das mit seinem wärmeaufnehmenden Ende in einer Abwärmequelle angeordnet ist. Die Wärme kann aber auch durch einen Dampfkreislauf zugeführt werden, der von einem dampfbeheizten Dampferzeuger gespiesen wird und durch die Wirbelschicht geführt ist. Die Wärme kann aber auch aus einem brennstoffbeheizten Heisswasser- oder Dampferzeuger stammen, dessen Rauchgase dem Wirbelschichtreaktor zugeführt werden. Weiter besteht die Möglichkeit, mindestens einen Teil der Wärme der Lösung aus Harnstoff und Wasser zuzuführen.

## Patentansprüche

1. Verfahren zum Herstellen von Ammoniak, dadurch gekennzeichnet, dass Harnstoff und Wasser in einer mindestens einen katalytisch wirksamen Stoff enthaltenden Wirbelschicht bei einer Temperatur zwischen 200 und 450°C zur chemischen Reaktion gebracht werden und das bei dieser Reaktion gebildete gasförmige Ammoniak mittels eines die Wirbelschicht durchströmenden gasförmigen Mediums abgezogen wird.

2. Verfahren nach Anspruch 1, dadurch gekennzeichnet, dass das Wasser zusammen mit dem in ihm gelösten Harnstoff in die Wirbelschicht eingebracht wird.

3. Verfahren nach Anspruch 1, dadurch gekennzeichnet, dass das Wasser dampfförmig mit dem gasförmigen Medium und der Harnstoff in reiner Form in die Wirbelschicht eingebracht werden.

4. Verfahren nach einem der Ansprüche 1 bis 3, dadurch gekennzeichnet, dass die Temperatur in der Wirbelschicht durch von der Zufuhr des Harnstoffs, des Wassers und des gasförmigen Mediums unabhängige Wärmezufuhr in die Wirbelschicht erzeugt wird.

5. Verfahren nach einem der Ansprüche 1 bis 3, dadurch gekennzeichnet, dass die Temperatur in der Wirbelschicht durch die Zufuhr des eine entsprechend hohe Temperatur aufweisenden gasförmigen Mediums erzeugt wird.

6. Verfahren nach Anspruch 1, dadurch gekennzeichnet, dass als katalytisch wirksamer Stoff Oxide und Oxidhydrate der Metalle Aluminium, Silizium, Titan, Zirkon, Chrom, Vanadium, Molybdän, Wolfram oder Mischungen davon in der Wirbelschicht verwendet werden.

7. Verfahren nach Anspruch 1, dadurch gekennzeichnet, dass als katalytisch wirksamer Stoff Zeolithe in der Wirbelschicht verwendet werden.

8. Verfahren nach einem der Ansprüche 1 bis 7, dadurch gekennzeichnet, dass der das abgezogene Ammoniak enthaltende Gasstrom einer Rauchgasentstickungsanlage zugeführt wird.
